# EUROPEAN PATENT APPLICATION

(11) **EP 4 458 553 A1**
(43) Date of publication of application: **06.11.2024**
(21) Application number: 24174105.7
(22) Date of filing: 03.05.2024
(51) Int. Cl.: B29C 64/118, B29C 64/245, B33Y 10/00, B33Y 30/00

(54) **INTEGRATED PRINT BED FILM FOR ADDITIVELY MANUFACTURED NONMETALLIC PARTS**

(30) Priority: 03.05.2023 US 202318311842
(71) Applicant: B/E Aerospace, Inc., Winston-Salem, NC 27105 (US)
(72) Inventor: HERMAN, Elizabeth A., Troy, NY (US); BOSWORTH, Alexander, Simsbury, CT (US)
(74) Representative: Dehns

(57) **Abstract**

A system for forming a non-metallic component including an integral secondary material is disclosed herein. The system includes a print bed (114), a consumable film (104) disposed on the print bed, a secondary material (106) disposed on the consumable film, and an extruder (108) configured to extrude a non-metallic material to form a non-metallic component on the secondary material, wherein the secondary material is monolithic with the non-metallic component.

## Description

### FIELD

The present disclosure generally relates additively manufactured components, and more specifically, to non-metallic additively manufactured components with an integrated print bed.

### BACKGROUND

Modern aircraft include electronic components that may be susceptible to electromagnetic interference ("EMI"). Some electronics in the aircraft may be located in a housing, or enclosure. In some cases, the enclosure may be metal and function as a faraday cage to protect against EMI. In some cases, the enclosure may be non-metallic and one or more walls of the non-metallic enclosure may be bonded to a metal sheet or mesh to protect against EMI. Generally, for housings or enclosures fabricated using Additive Manufacturing (AM), the protective, conductive materials or surfaces are secondarily bonded to the part surface after the part has been fabricated.

Modern aircraft also include components with a decorative finish that has been bonded to the customer-facing surface to create a more pleasing-looking aircraft interior. If such components are fabricated using AM the decorative finish is secondarily bonded to the part surface after the part has been fabricated.

### SUMMARY

Disclosed herein is a system including a print bed, a consumable film disposed on the print bed, a secondary material disposed on the consumable film, and an extruder configured to extrude a non-metallic material to form a non-metallic component on the secondary material, wherein the secondary material is monolithic with the non-metallic component.

In various embodiments, the consumable film comprises an adhesive back configured to secure the consumable film to the print bed. In various embodiments, the system further includes an adhesive applied to the consumable film to secure the secondary material to the consumable film. In various embodiments, the secondary material is a conductive layer material.

In various embodiments, the secondary material is a decorative material. In various embodiments, the consumable film, the secondary material, and the non-metallic component are configured to be removed from the print bed after forming the non-metallic component. In various embodiments, the consumable film is configured to be removed from the non-metallic component and monolithic with secondary material.

Also disclosed herein is a method of manufacturing a non-metallic component including an integral secondary material. The method includes placing a consumable film on a print bed of an additive manufacturing system, placing a secondary material on the consumable film, forming the non-metallic component on the secondary material using an additive manufacturing process, the secondary material being integral with the non-metallic component, and removing the non-metallic component from the print bed.

In various embodiments, the method further includes removing the consumable film from the non-metallic component. In various embodiments, the method further includes applying a first adhesive to the print bed before placing the consumable film on the print bed and applying a second adhesive to the consumable film before placing the secondary material on the consumable film.

In various embodiments, the secondary material is a conductive layer material. In various embodiments, the additive manufacturing process includes heating a filament and extruding the heated filament onto the secondary material.

Also disclosed herein is a method including securing a film on a print bed of an additive manufacturing apparatus, securing a secondary material on the film, extruding a filament from the additive manufacturing apparatus onto the secondary material forming a monolithic component including the extruded filament and the secondary material, and removing the monolithic component from the print bed.

In various embodiments, the filament includes one of a carbon fiber material, a fiberglass material, a polyamide material, a thermoplastic material, , a resin material, or a plastic material. In various embodiments, extruding the filament further comprises heating the filament. In various embodiments, the filament is a non-metallic filament. In various embodiments, the secondary material is a conductive layer. In various embodiments, the secondary material is a decorative material. In various embodiments, the method further includes removing the film from the monolithic component, wherein the film is a consumable film.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an additive manufacturing machine, in accordance with various embodiments.
FIGS. 2A, 2B, and 2C illustrate a component including an integrated conductive layer, in accordance with various embodiments.
FIGS. 3A, 3B, and 3C illustrate a component including an integrated decorative material, in accordance with various embodiments.
FIG. 4 illustrates a flow diagram of a method for forming a component including an integrated secondary material, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein are systems and methods for forming non-metallic components including an integrated secondary material using an additive manufacturing process. Typically, the secondary material, such as a metallic EMI shield or a decorative material, is secondarily bonded to the non-metallic component after the manufacturing of the non-metallic component, such as by additive manufacturing. This results in added expense and time for labor and materials due to the time used for preparation of the component and application of the secondary material to the component, as well as waste of excess bonding materials resulting from the secondary bonding process. Furthermore, personal protective equipment and additional workspace safety equipment may be used and, in some cases, discarded, resulting in more waste.

Disclosed herein, in various embodiments, is a system for integrating the secondary material into the component during an additive manufacturing process. In various embodiments, a consumable film may be attached to a top surface of a print bed of an additive manufacturing machine. In various embodiments, a conductive layer may be attached to a top surface of the consumable film and the non-metallic component formed directly onto the conductive layer, thereby integrating the conductive layer into the non-metallic component. In various embodiments, a decorative material may be attached to the top surface of the consumable film and the non-metallic component formed directly onto the decorative material, thereby integrating the decorative material into the non-metallic component. In various embodiments, the consumable film may be removed after the non-metallic component is manufactured. In various embodiments, this improves the functionality of the additively manufactured component because of the integrated EMI shield. In various embodiments, this improves the process of additively manufacturing a decorative component because of the integrated decorative material.

Generally, the three dimensional (3D) printing and additive manufacturing industry is moving towards reusable surfaces for the additive manufacturing system to reduce waste and save on expenses of consumable films. However, it will be appreciated by those in the industry that by utilizing a consumable film in the process disclosed herein, there is a cost and waste savings by reducing the number of person hours and materials used to secondarily bond the second material (e.g., conductive layer, decorative material, etc.) to the non-metallic component.

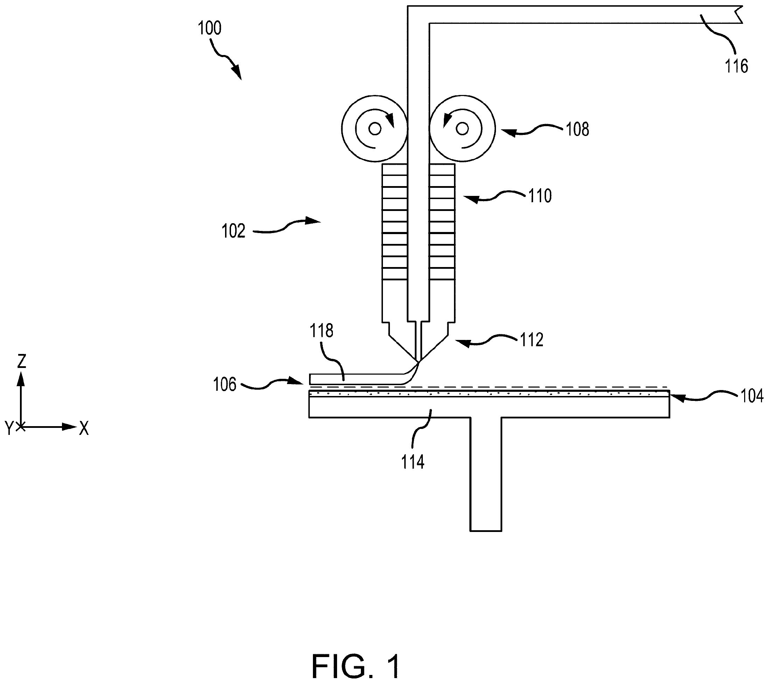

Referring now to FIG. 1, an additive manufacturing system 100 is illustrated, in accordance with various embodiments. Additive manufacturing system 100 includes an additive manufacturing machine 102, a consumable film 104, and a secondary material 106. Additive manufacturing machine 102, also referred to as a 3D printer, includes a filament extruder 108, a heater 110, a nozzle 112, and a print bed 114. Additive manufacturing machine 102 may be configured to extrude a filament 116 onto print bed 114 layer by layer in a series of shapes in order to form a component. In various embodiments, nozzle 112 may be configured to move in three dimensions, along the x-axis, along the y-axis, and along the z-axis while print bed 114 remains stationary. In various embodiments, print bed 114 may be configured to move along the x-axis and/or along the y-axis. In various embodiments, print bed 114 may be configured to move in three dimensions, along the x-axis, along the y-axis, and along the z-axis while nozzle 112 remains stationary. In various embodiments, both nozzle 112 and print bed 114 may be configured to move in one or more dimensions, such as for example, nozzle 112 moving along the x-axis and print bed 114 moving along the y-axis and along the z-axis.

In various embodiments, additive manufacturing machine 102 may be a fused deposition modeling (FDM) machine. In various embodiments, additive manufacturing machine 102 may be a fused filament fabrication (FFF) machine. In various embodiments, additive manufacturing machine 102 may use a heated extrusion of filament 116. In various embodiments, additive manufacturing machine 102 may use a non-heated, or cold, extrusion of filament 116. Accordingly, in various embodiments, filament 116 may be a hot extrusion rod, a cold extrusion rod, or hot extrusion pellets, among others. In various embodiments, filament 116 may include one or more of a carbon fiber material, a fiberglass material, a thermoplastic material, a nylon material, a resin material, and/or a plastic material, among others.

Consumable film 104 is coupled to print bed 114 before beginning the manufacturing process. In various embodiments, consumable film 104 may be coupled to print bed 114 using clamps, screws, or bolts, among other mechanical fasteners. In various embodiments, consumable film 104 may be coupled to print bed 114 by an adhesive affixed to a back, or bottom, of consumable film 104. In various embodiments, consumable film 104 may be coupled to print bed 114 by a vacuum contained within print bed 114. In various embodiments, consumable film 104 may be a single use film made from acrylonitrile butadiene styrene (ABS), polycarbonate, polyetherimide (sold under the name Ultem^{®}), or polyimide (sold under the name Kapton^{®}), among others. Generally, the industry is moving away from the use of consumable films and toward the use of reusable bed liners in order to reduce cost and waste. However, as discussed above, the use of consumable film 104 in the process disclosed herein provides a larger reduction in cost and waste than the use of a reusable bed liner.

Secondary material 106 is coupled to consumable film 104 before beginning the manufacturing process. In various embodiment, secondary material 106 is coupled to consumable film 104 using a spray adhesive, a liquid adhesive, or other adhesive. In various embodiments, the adhesive may be applied to consumable film 104, secondary material 106 may be placed onto consumable film 104, and then secondary material 106 may be smoothed out over top of consumable film 104 on print bed 114. In various embodiments, secondary material 106 may be a metal or metallic alloy material. In various embodiments, secondary material 106 may be a non-metallic conductive material. In various embodiments, secondary material 106 may be a mesh material. In various embodiments, secondary material 106 may include copper, copper alloy, aluminum, aluminum alloy, nickel, nickel alloy, and/or other conductive metal and/or metallic alloys that shield against electromagnetic interference (EMI). In various embodiments, secondary material 106 may include graphite, graphene, graphene oxide and/or other conductive non-metallic materials that shield against electromagnetic interference (EMI). In various embodiments, secondary material 106 may be decorative material to improve the visual appeal of the component being manufactured or to add branding to the component being manufactured. In various embodiments, the decorative material may include vinyl, metal, metal alloy, or plastic, among others.

Additive manufacturing system 100 receives filament 116 through filament extruder 108 and extrudes filament 116 through nozzle 112 to form an extruded layer 118. In various embodiments, heater 110 heats filament 116 to make filament pliable before depositing filament 116 through nozzle 112. Extruded layer 118 may be formed on secondary material 106 or on a previous extruded layer 118 by moving nozzle 112, print bed 114, or both. In various embodiments, at least the first extruded layers 118 bond to secondary material 106 creating a component having an integrated secondary material 106. In other words, extruded layer 118 and secondary material 106 form a single monolithic unit without the use of a costly and wasteful secondary bonding process.

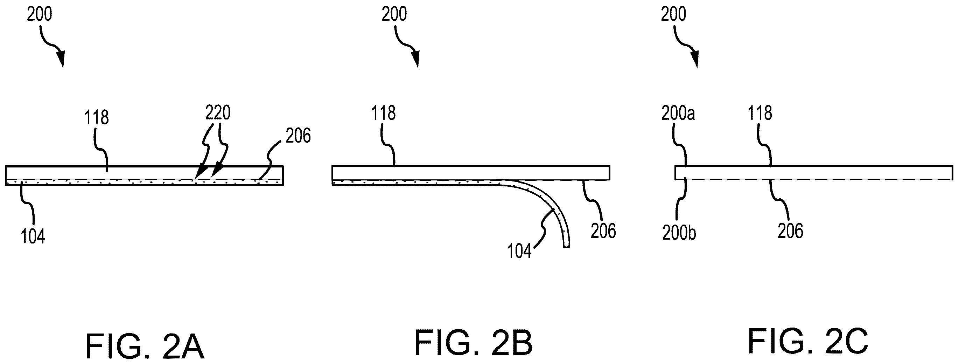

Referring now to FIGS. 2A-2C, a component 200 formed by additive manufacturing system 100 and removed from print bed 114 is illustrated, in accordance with various embodiments. Component 200 has a top side 200a, a bottom side 200b, and includes a conductive layer 206 that is bonded to one or more extruded layers 118. Consumable film 104 is coupled to conductive layer 206 and, in various embodiments, extruded layer 118 after manufacture. Conductive layer 206 may be an example of secondary material 106. As illustrated, in FIG. 2A, conductive layer 206 includes a plurality of openings 220 through which extruded layer 118 may pass, improving a bond between extruded layer 118 and conductive layer 206. In various embodiments, a second extruded layer 118 may contact and bond with conductive layer 206. This process integrates conductive layer 206 into extruded layer 118, and therefore, component 200. In various embodiments, conductive layer 206 may be including a plurality of openings formed in a metal material. In various embodiments, the plurality of openings may have uniform or varying sizes. In various embodiments, conductive layer 206 may be configured to block electromagnetic interference (EMI). In various embodiments, conductive layer 206 may be a perforated metal, an expanded mesh, a wire mesh, a metal mesh, a metal foil, a conductive fabric, or a conductive nonwoven mat.

Referring now to FIG. 2B, consumable film 104 is removed from component 200. This may involve peeling consumable film 104 off bottom side 200b of component 200. In various embodiments, a tool may be used to scrape consumable film 104 off component 200. In various embodiments, a solvent may be used to release consumable film 104 from component 200.

Referring now to FIG. 2C, consumable film 104 is removed from component 200. In various embodiments, a post manufacture process may be performed on component 200, including top side 200a and bottom side 200b. In various embodiments, the post manufacture process may be used to make the faces and edges of component 200 uniform. Component 200 may be then installed as is or may be coupled to other components prior to installation in an aircraft.

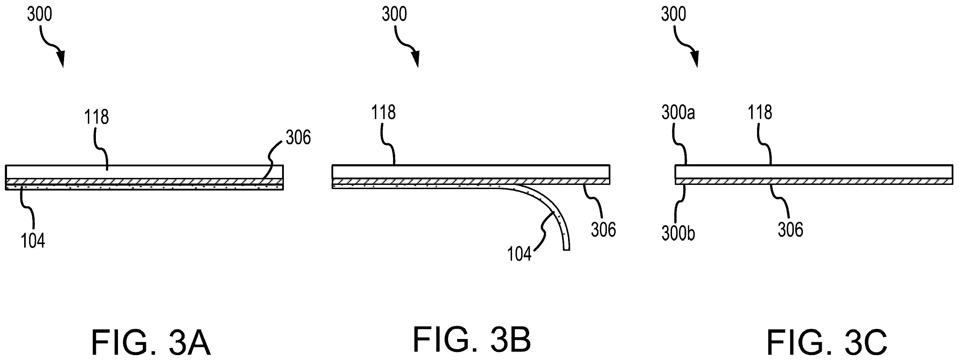

Referring now to FIGS. 3A-3C, a component 300 formed by additive manufacturing system 100 and removed from print bed 114 is illustrated, in accordance with various embodiments. Component 300 has a top side 300a, a bottom side 300b, and includes a decorative material 306 that is bonded to one or more extruded layers 118. Consumable film 104 is coupled to decorative material 306 and, in various embodiments, extruded layer 118 after manufacture. decorative material 306 may be an example of secondary material 106. As illustrated, in FIG. 3A, decorative material 306 is a solid piece of material. In various embodiments, decorative material 306 may include one or more indents, openings, or other features to which extruded layer 118 may bond. In various embodiments, a second extruded layer 118 may contact and bond with decorative material 306. This process integrates decorative material 306 into extruded layer 118, and therefore, component 300. In various embodiments, decorative material 306 may include a metal material, a metal alloy material, or a non-metal material used for aesthetic purposes. In various embodiments, decorative material 306 may have no functional use. For example, a thin material including a pattern or a design that is intended to be a surface for component 300. In various embodiments, the decorative layer could be a polyvinyl fluoride commercially available under the designation Tedlar^{®}, a thermoplastic film, a reinforced thermoplastic layer, a woven dry fiber, or a mat dry fiber.

Referring now to FIG. 3B, consumable film 104 is removed from component 300. This may involve peeling consumable film 104 off bottom side 300b of component 300. In various embodiments, a tool may be used to scrape consumable film 104 off component 300. In various embodiments, a solvent may be used to release consumable film 104 from component 300.

Referring now to FIG. 3C, consumable film 104 is removed from component 300. In various embodiments, a post manufacture process may be performed on component 300, including top side 300a and bottom side 300b. In various embodiments, the post manufacture process may be used to make the faces and edges of component 300 uniform. In various embodiments, uniform may include smoothing the surface of component 300, making a thickness of component 300 the same across component 300, and/or removing any manufacturing artifacts, among others. Component 300 may be then installed as is or may be coupled to other components prior to installation in an aircraft.

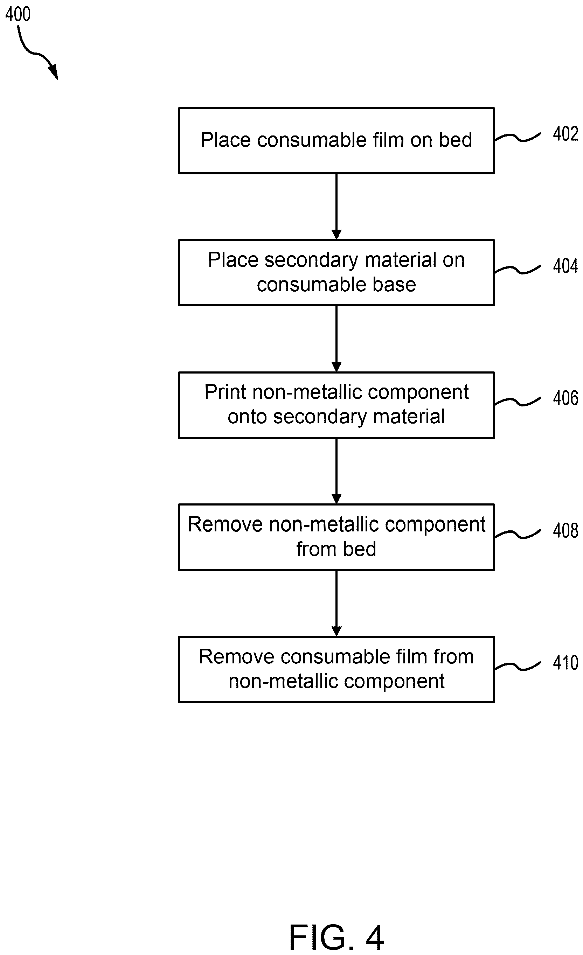

Referring now to FIG. 4, a method 400 of manufacturing a component including an integrated secondary material is illustrated, in accordance with various embodiments. In various embodiments, method 400 may be performed by additive manufacturing system 100. In various embodiments, method 400 may be performed by systems and apparatuses currently being used to manufacture non-metallic components, including different types of additive manufacturing systems than those discussed herein.

At block 402, a consumable film (e.g., consumable film 104) is placed on a print bed (e.g., print bed 114) of the additive manufacturing system (e.g., additive manufacturing system 100). In various embodiments, consumable film 104 includes an adhesive backing that secures consumable film 104 to print bed 114. In various embodiments, a separate adhesive (e.g., spray, liquid, etc.) may be used to secure consumable film 104 to print bed 114. In various embodiments, a vacuum contained in print bed 114 may secure consumable film 104 to print bed 114.

At block 404, a secondary material (e.g., secondary material 106) is placed on consumable film 104. In various embodiments, secondary material 106 is a conductive layer material. In various embodiments, secondary material 106 is a decorative material.

At block 406, a non-metallic component (e.g., extruded layer 118) is printed onto secondary material 106. In various embodiments, additive manufacturing system 100 may be used to extrude filament 116 to form the non-metallic component onto and integral with secondary material 106. In various embodiments, other methods, systems, or materials may be used to form component 118 onto and integral with secondary material 106.

At block 408, the non-metallic component, including integral secondary material 106, is removed from print bed 114. In various embodiments, consumable film 104 is removed along with the non-metallic component. In various embodiments, the non-metallic component may at least partially separate from consumable film 104 during removal.

At block 410, consumable film 104 is removed from the non-metallic component, including integral secondary material 106. In various embodiments, this includes peeling, scraping, or otherwise removing consumable film 104 from the non-metallic component.

The methods and system disclosed herein allow from improved production efficiency of additively manufactured non-metallic components by reducing, or removing, post processing steps such bonding a secondary material (e.g., conductive layer) to the non-metallic component. The improved efficiency results in lowered manufacturing costs and time associated with manufacturing non-metallic components including a secondary material. Additionally, the systems and methods disclosed herein reduce waste typically associated with bonding the secondary material to the non-metallic component after manufacture. Furthermore, the systems and methods disclosed herein increase the functionality of additively manufactured non-metallic components.

Benefits, other advantages, and solutions to problems have been described herein with regard to specific embodiments. It should be understood that any of the above-described concepts can be used alone or in combination with any or all of the other above-described concepts and still fall within the scope of the invention as defined by the claims.

## Claims

1. A system, comprising:
a print bed (114);
a consumable film (104) disposed on the print bed;
a secondary material (106) disposed on the consumable film; and
an extruder (108) configured to extrude a non-metallic material to form a non-metallic component on the secondary material, wherein the secondary material is monolithic with the non-metallic component.

2. The system of claim 1, wherein the consumable film comprises an adhesive back configured to secure the consumable film to the print bed.

3. The system of claim 1 or 2, further comprising an adhesive applied to the consumable film to secure the secondary material to the consumable film.

4. The system of any preceding claim, wherein the secondary material is a conductive material or wherein the secondary material is a decorative material.

5. The system of any preceding claim, wherein the consumable film, the secondary material, and the non-metallic component are configured to be removed from the print bed after forming the non-metallic component, and optionally wherein the consumable film is configured to be removed from the non-metallic component and monolithic with secondary material.

6. A method of manufacturing a non-metallic component including an integral secondary material, comprising:
placing a consumable film (104) on a print bed (114) of an additive manufacturing system;
placing a secondary material (106) on the consumable film;
forming the non-metallic component on the secondary material using an additive manufacturing process, the secondary material being integral with the non-metallic component; and
removing the non-metallic component from the print bed.

7. The method of claim 6, further comprising removing the consumable film from the non-metallic component.

8. The method of claim 6 or 7, further comprising:
applying a first adhesive to the print bed before placing the consumable film on the print bed; and
applying a second adhesive to the consumable film before placing the secondary material on the consumable film.

9. The method of any of claims 6 to 8, wherein the secondary material is a conductive layer material, or wherein the secondary material is a decorative material.

10. The method of any of claims 6 to 9, wherein the additive manufacturing process includes heating a filament and extruding the heated filament onto the secondary material.

11. A method, comprising:
securing a film (104) on a print bed (114) of an additive manufacturing apparatus;
securing a secondary material (106) on the film;
extruding a filament (116) from the additive manufacturing apparatus onto the secondary material forming a monolithic component including the extruded filament and the secondary material; and
removing the monolithic component from the print bed.

12. The method of claim 11, wherein the filament includes one of a carbon fiber material, a fiberglass material, a polyamide material, a thermoplastic material, , a resin material, or a plastic material.

13. The method of claim 11 or 12, wherein the extruding the filament further comprises heating the filament.

14. The method of any of claims 11 to 13, wherein the filament is a non-metallic filament, and or wherein the secondary material is a conductive layer, or wherein the secondary material is a decorative material.

15. The method of any of claims 11 to 14, further comprising removing the film from the monolithic component, wherein the film is a consumable film.
